# EUROPÄISCHE PATENTSCHRIFT

(11) **EP 1 560 726 B1**
(45) Veröffentlichungstag und Bekanntmachung des Hinweises auf die Patenterteilung: **02.08.2006**
(21) Anmeldenummer: 03776823.1
(22) Anmeldetag: 30.10.2003
(51) Int. Cl.: B60J 7/185, B60J 7/20, B60J 7/12

(54) **CABRIOLET-FAHRZEUG MIT VERSENKBAREM VERDECK**
CABRIOLET VEHICLE COMPRISING A RETRACTABLE TOP
VEHICULE CABRIOLET COMPORTANT UNE CAPOTE ESCAMOTABLE

(30) Priorität: 05.11.2002 DE 10251409
(43) Veröffentlichungstag der Anmeldung: 10.08.2005
(73) Patentinhaber: Wilhelm Karmann GmbH, 49084 Osnabrück (DE)
(72) Erfinder: HABACKER, Norbert, 49565 Bramsche (DE); BÖHNKE, Achim, 49525 Tecklenburg (DE); WASILEWSKI, Detlef, 49084 Osnabrück (DE)
(86) Internationale Anmeldenummer: PCT/DE2003/003609
(87) Internationale Veröffentlichungsnummer: WO 2004/041572

(56) Entgegenhaltungen:
- EP-A- 0 638 453
- DE-A- 19 935 732
- US-A- 5 295 722

## Beschreibung

Die Erfindung betrifft ein Cabriolet-Fahrzeug mit einem versenkbaren Verdeck gemäß dem Oberbegriff des Anspruchs 1. Ein Fahrzeug dieser Art ist in EP 0 638 453 A offenbart.

Bei bekannten Faltverdecks für Cabriolet-Fahrzeuge (EP 0 638 453 B1) ist ein am Faltverdeck vorgesehener Verdeckspannbügel in der Dach-Schließstellung auf dem Verdeckkastendeckel aufgelegt. Dabei sind der Verdeckspannbügel und der Verdeckkastendeckel im Bereich jeweiliger Schließvorrichtungen durch einen in einen Verriegelungstopf eingreifenden Rasthaken als Verbindungsglied gesichert. Die Verriegelungsposition wird dabei mittels eines durch den Rasthaken bzw. eine Klappe betätigten Mikroschalter überwacht, so daß damit die Bewegung des Verdeckspannbügels in die Öffnungs- bzw. Schließstellung steuerbar ist.

Die Erfindung befaßt sich mit dem Problem, ein Faltverdeck für ein Cabriolet-Fahrzeug im Bereich des Verdeckspannbügels so auszubilden, daß mit geringem technischen Aufwand bei Auflage des Verdeckspannbügels auf dem Verdeckkastendeckel eine Verbesserung der Verbindungsstabilität möglich ist.

Ausgehend von einem Cabriolet-Fahrzeug gemäß dem Oberbegriff des Anspruchs 1 löst die Erfindung die Aufgabe mit den Merkmalen des kennzeichnenden Teils des Anspruchs 1. Hinsichtlich wesentlicher weiterer Ausgestaltungen wird auf die Ansprüche 2 bis 17 verwiesen.

Bei dem erfindungsgemäßen Cabriolet-Fahrzeug ist das Faltverdeck im Bereich des Verdeckspannbügels mit zumindest einer Schließvorrichtung versehen, bei der als Riegelglieder zwei Anlageschenkel mit einem am Verdeckkastendeckel vorgesehenen Gegenglied als Verbindungseinheit zusammenwirken, so daß diese Baugruppe mit geringem technischen Aufwand auch quer zur Fahrzeuglängsmittelebene wirkende Kräfte aufnehmen kann und damit die Verbindungsstabilität insbesondere zur Aufnahme dynamischer Fahrbelastungen verbessert ist.

Zur Festlegung des am Verdeckkastendeckel befindlichen Gegengliedes ist ein dieses unterhalb einer Durchgriffsöffnung positionierendes Halteteil in Form eines Tragrahmens vorgesehen, an dem zwei die Durchlaßöffnung jeweils halbseitig verschlie-ßende Klappenteile abgestützt sind. Diese beiden Klappenteile werden bei Verlagerung des Verdeckspannbügels mittels jeweiliger an den Anlageschenkeln befindlicher, rollenförmiger Stützelemente gleichzeitig betätigt, wobei zumindest eine der Klappen mit einem elektrischen Kontaktgeber in Form eines Schalters o. dgl, zusammenwirkt und damit eine sichere Kontrolle der Öffnungs- bzw. Schließstellung des Faltverdecks bzw. dessen Verdeckspannbügels möglich ist.

Weitere Einzelheiten und Vorteile der Erfindung ergeben sich aus der nachfolgenden Beschreibung und der Zeichnung, die ein Ausführungsbeispiel des erfindungsgemäßen Faltverdecks im Bereich der Schließvorrichtung näher veranschaulicht. In der Zeichnung zeigen:
- Fig. 1: eine perspektivische Heckansicht eines Cabriolet-Fahrzeugs mit dessen Faltverdeck in Schließstellung,
- Fig. 2: eine schematische Ausschnittsdarstellung des Heckbereichs des Fahrzeugs gemäß einer Linie II-II in Fig. 1,
- Fig. 3: eine Einzeldarstellung einer Schließvorrichtung in einem Teilbereich III gemäß Fig. 1,
- Fig. 4: eine perspektivische Vorderansicht der Schließvorrichtung gemäß Fig. 3,
- Fig. 5: eine Schnittdarstellung der Schließvorrichtung gemäß einer Linie V-V in Fig. 3, und
- Fig. 6: eine vergrößerte Ausschnittsdarstellung auf den Bereich III in Fig. 1 bei geöffnetem Faltverdeck und dessen Verlagerung unterhalb des heckseitigen Verdeckkastendeckels.

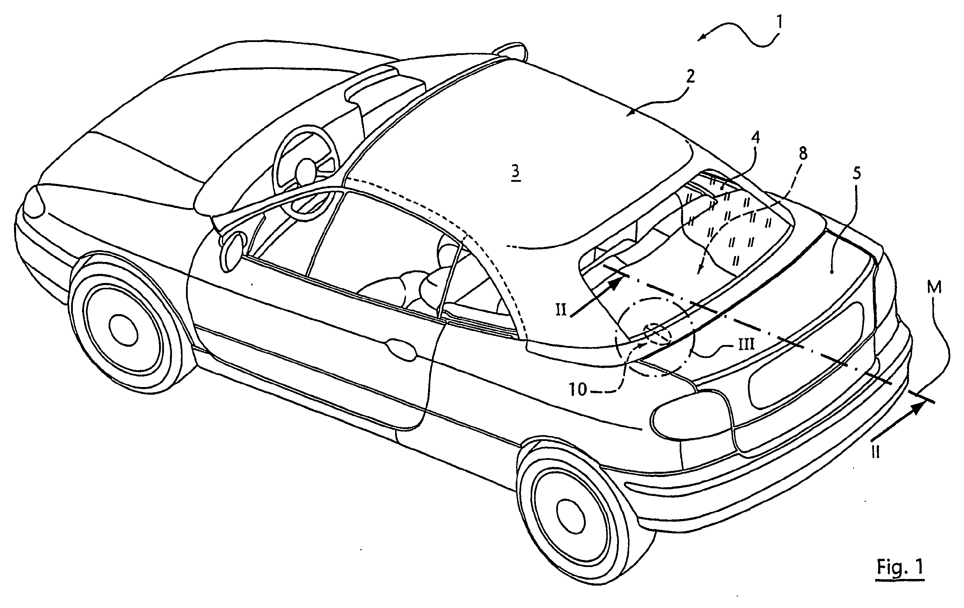

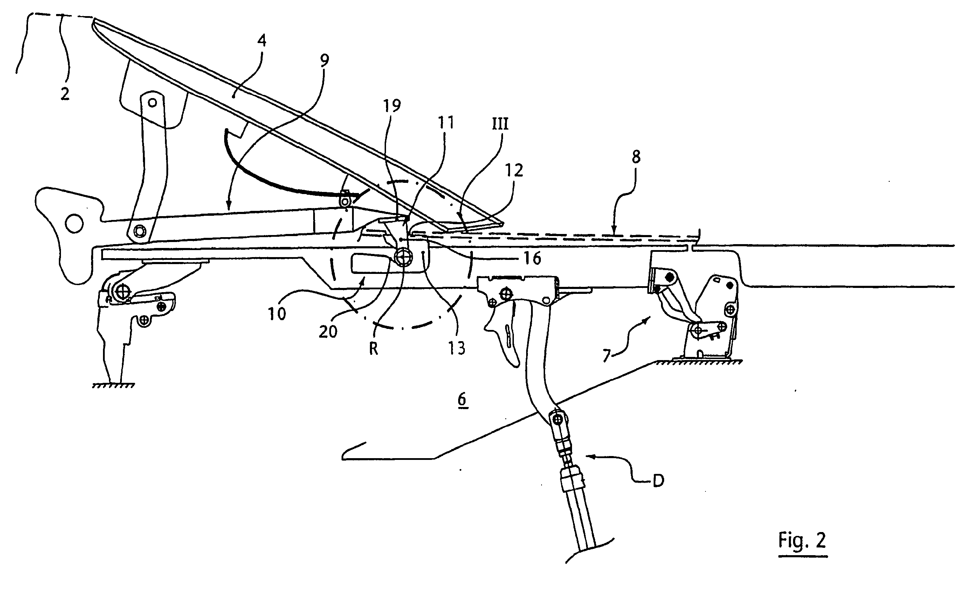

In Fig. 1 ist ein insgesamt mit 1 bezeichnetes Cabriolet-Fahrzeug in einer Perspektivdarstellung veranschaulicht, wobei dessen geschlossenes Faltverdeck 2 eine in die Dachhaut 3 integrierte Heckscheibe 4 aufweist. In der dargestellten Schließstellung des Faltverdecks 2 ist die Dachhaut 3 in ihrem heckseitigen Bereich unterhalb der Heckscheibe 4 auf einem mit einem Kofferraumdeckel 5 in einer Ebene befindlichen Verdeckkastendeckel 8 (Fig. 2) abgelegt. Mit diesem im wesentlichen U-förmig in der heckseitigen Karosseriekontur verlaufenden Verdeckkastendeckel 8 ist ein zur Aufnahme des Verdecks 2 vorgesehener Verdeckkasten 6 oberseitig verschließbar.

Der Verdeckkastendeckel 8 ist mittels jeweiliger zur Fahrzeuglängsmittelebene M spiegelbildlich gegenüberliegender Scharniervorrichtungen 7 (Fig. 2, nur eine Scharniervorrichtung dargestellt) an der Fahrzeugkarosserie schwenkbar abgestützt. Ausgehend von dieser Scharniervorrichtung 7 in Fahrtrichtung F nach vorn wirkt der Verdeckkastendeckel 8 mit zumindest einer im Bereich eines randseitigen Verdeckspannbügels 9 vorgesehenen Schließvorrichtung 10 zusammen (in Fig. 1: Strichdarstellung im Bereich III).

Aus EP 0 638 453 B1 ist bekannt, daß im Bereich derartiger Schließvorrichtungen 10 der Verdeckkastendeckel 8 mit dem Verdeckspannbügel 9 durch eine Schwenk-Schub-Bewegung verriegelbar bzw. in entgegengesetzter Richtung entriegelbar ist. Diese Bewegung wird mittels eines hydraulischen Antriebes D (Fig. 2) eingeleitet und durch dessen Zusammenwirken mit der Scharniervorrichtung 7 gesteuert. In zweckmäßiger Ausführung weist die Verdeckkinematik eine zweite Schließvorrichtung auf (nicht dargestellt), die spiegelbildlich zu der in Fig. 1 dargestellten Vorrichtung 10 angeordnet ist.

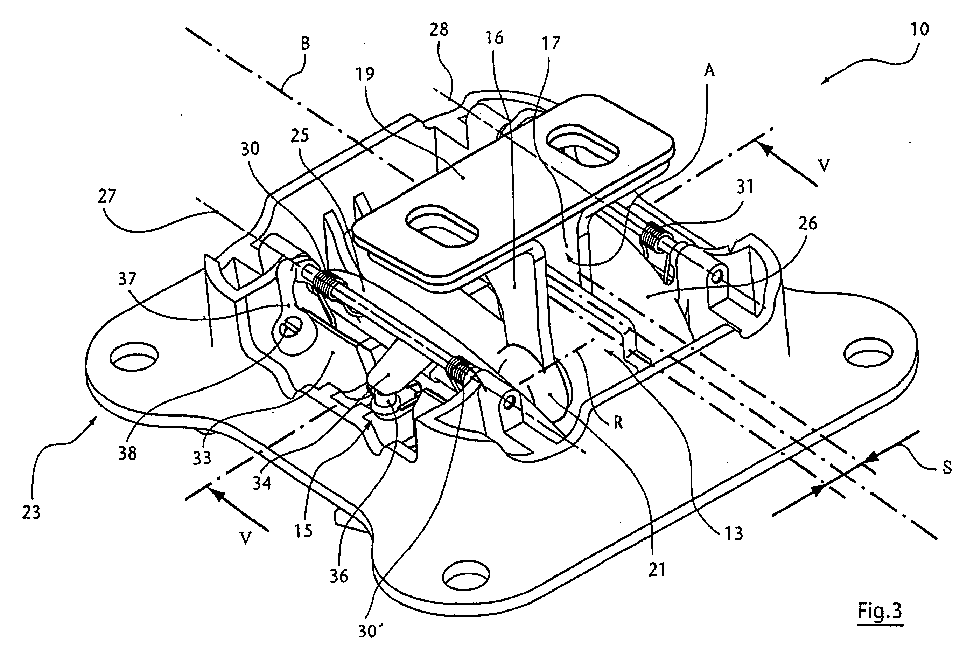

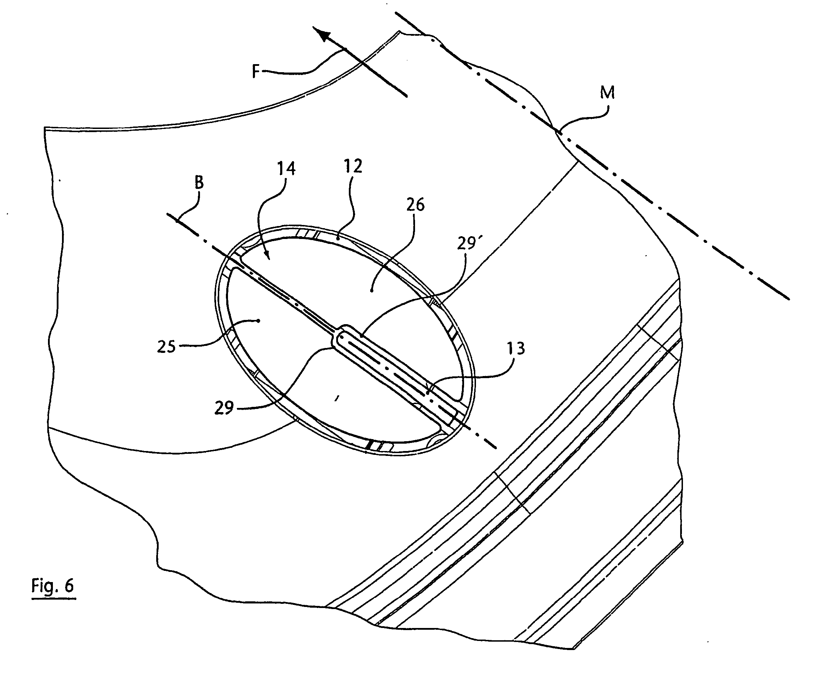

In Fig. 2 ist gemäß einer Schnittdarstellung II-II die Schließvorrichtung 10 im Bereich des Verdeckspannbügels 9 bzw. des Verdeckkastendeckels 8 näher veranschaulicht. Ein am Verdeckspannbügel 9 befindliches Verbindungsglied 11 ist dabei an einem Gegenglied 13 festgelegt, das unterhalb einer Durchgriffsöffnung 12 am Verdeckkastendeckel 8 vorgesehen ist. Im Bereich der Durchgriffsöffnung 12 ist eine in Fig. 2 nicht näher dargestellte Klappe 14 (Fig. 6) vorgesehen, das mittels des Verbindungsgliedes 11 aus der Schließstellung verlagerbar ist und dabei ein Schaltglied 15 (Fig. 3) betätigt.

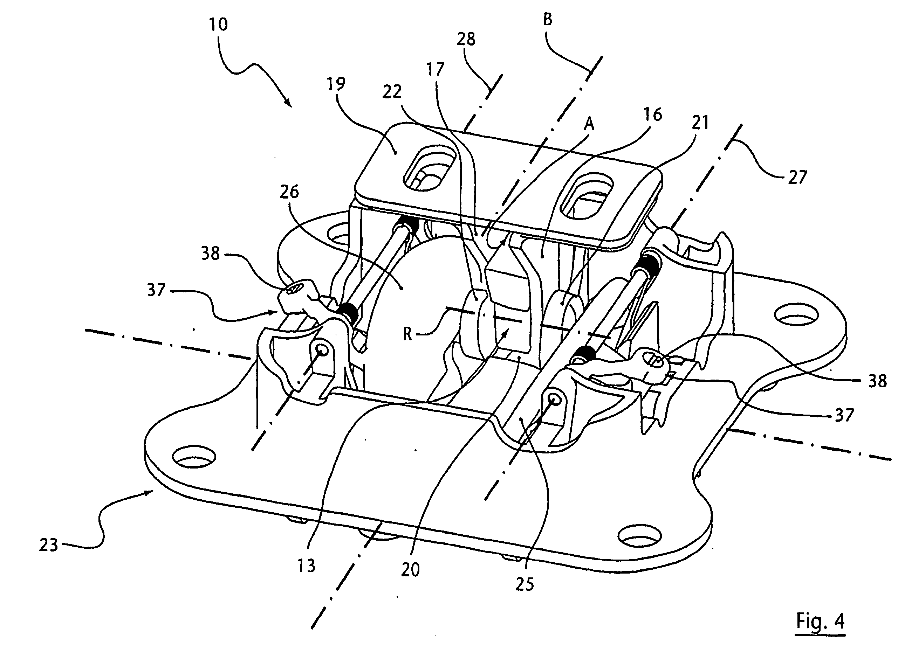

Die Schließvorrichtung 10 weist in erfindungsgemäßer Ausführung als Verbindungsglied 11 zwei Anlageschenkel 16 und 17 auf, die als L-förmige Teile an einer am Verdeckspannbügel 9 festgelegten Zwischenplatte 19 (Fig. 3) gehalten sind. Die beiden Anlageschenkel 16 und 17 sind dabei mit einem Abstand S im wesentlichen spiegelbildlich zur Mittellängsebene B der Schließvorrichtung 10 angeordnet. Damit bilden die Anlageschenkel 16 und 17 einen Aufnahmespalt A, in dem das Gegenglied 13 beim Schließen des Faltverdecks 2 zumindest bereichsweise formschlüssig aufgenommen ist. Diese Verbindungsstellung im Bereich der Schließvorrichtung 10 ist insbesondere in den Perspektivdarstellungen gemäß Fig. 3 und 4 verdeutlicht.

Mit dieser Verbindungseinheit ist erreicht, daß mit den am jeweiligen Gegenglied 13 anliegenden Anlageschenkeln 16 und 17 quer und/oder längs zur Mittellängsebene B wirksame Bewegungen, beispielsweise Schwingungen während der Bewegung des Fahrzeuges, durch die weitgehend spielfrei aneinanderliegenden Teile aufgenommen werden. Die beiden Anlageschenkel 16 und 17 weisen dabei im wesentlichen die gleiche Länge auf und bilden damit an den jeweiligen Seitenflächen des Gegengliedes 13 Anlagepaarungen, die den Verdeckspannbügel 9 querkraftstabil fixieren.

In zweckmäßiger Ausführung sind die Anlageschenkel 16 und 17 durch zumindest einen in Richtung der Querachse R (Fig. 2) verlaufenden Quersteg (nicht dargestellt) verbunden, wobei dieser im Bereich des Gegengliedes 13 in eine Aufnahmemulde 20 einführbar ist. Damit sind das Verbindungsglied 11 bzw. die beiden Anlageschenkel 16 und 17 in der Schließstellung des Verdecks auch bei in Richtung der Fahrzeuglängsmittelebene M wirkenden Belastungen sicher gehalten.

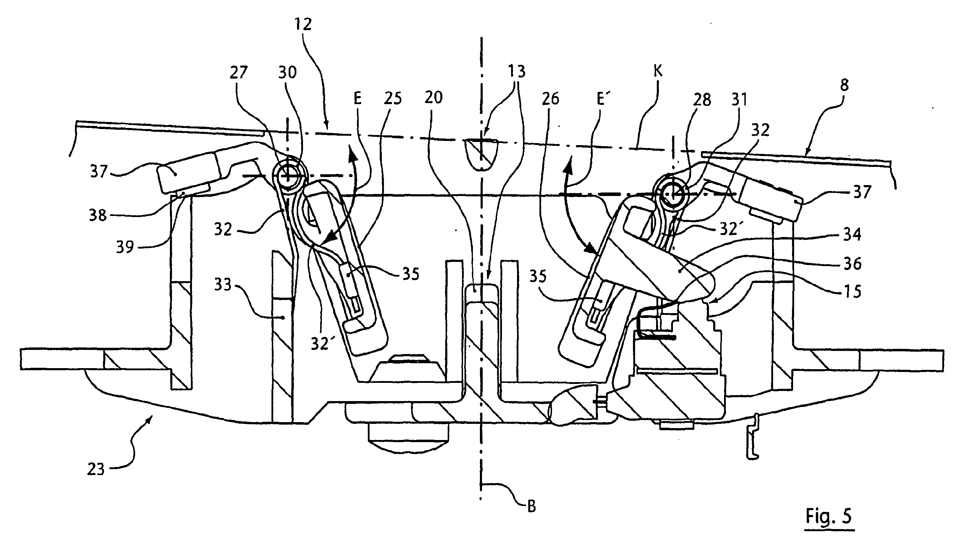

Die Darstellungen gemäß Fig. 3 und 4 verdeutlichen, daß die Anlageschenkel 16 und 17 an ihrem jeweiligen freien Ende mit einem seitlich am Gegenglied 13 anlegbaren Stützansatz 21 bzw. 22 versehen sind. In zweckmäßiger Ausführung ist im Bereich dieser beiden Stützansätze 21, 22 auch der nicht näher dargestellte Quersteg im Bereich der Achse R vorgesehen. Die Stützansätze 21, 22 sind in der dargestellten Ausführung jeweils rollenförmig ausgebildet, wobei deren Umfangskontur über die Anlageschenkel 16, 17 jeweils stirnseitig so vorsteht, daß bei der Bewegung des Verdeckspannbügels 9 die rollenförmigen Stützansätze 21, 22 als vorstehende Bauteile die Durchgriffsöffnung 12 (Fig. 5) am Verdeckkastendeckel 8 durchgreifen und dabei schonend auf die Klappe 14 auflegbar sind.

Die Einzeldarstellungen der Schließvorrichtung 10 gemäß Fig. 3 bis 5 zeigen, daß das Gegenglied 13 an einem eine zentrale Formausnehmung als Aufnahmeöffnung bildenden Tragrahmen 23 mit im wesentlichen rechteckiger Kontur (Fig. 4) abgestützt ist. In der Einbaulage (Fig. 5, Fig. 6) ist die Durchgriffsöffnung 12 dem Bereich der Aufnahmeöffnung des Tragrahmens 23 zugeordnet.

Der Tragrahmen 23 ist dabei im Bereich seiner Aufnahmeöffnung mit zwei die Klappe 14 bildenden Klappenteilen 25 und 26 versehen, deren jeweilige Stützachse 27, 28 parallel zur Mittellängsebene B der Schließvorrichtung 10 verläuft. Mit diesen Stützachsen 27 und 28 sind die Klappenteile 25 und 26 in einer am oberen Randbereich des Gegengliedes 13 gegenüberliegenden Schließstellung (Fig. 6) gehalten und können aus dieser Stellung mittels der am Verdeckspannbügel 9 befindlichen Anlageschenkel 16, 17 nach unten schwenkend in die Öffnungsstellung (Fig. 3 bis Fig. 5) überführt werden. Die beiden Klappenteile 25 und 26 sind im Bereich ihrer in Schließstellung (Fig. 6) gegenüberliegenden Umfangskontur mit jeweils einer Formausnehmung 29, 29' versehen, in der das Gegenglied 13 so aufnehmbar ist, daß die Klappenteile 25, 26 bei ihrer Öffnungs- bzw. Schließbewegung (Fig. 5, Pfeil E, E') ungehindert verlagerbar sind.

Die durch die Anlageschenkel 16 und 17 nach unten verschwenkbaren Klappenteile 25, 26 sind an ihrer Unterseite jeweils mit einer die Stützachse 27 bzw. 28 umfassenden Rückstellfeder 30, 31 versehen, so daß die Klappenteile 25 und 26 bei Rückbewegung bis in eine Konturebene K (Fig. 5, Strichlinie) hochschwenken und dabei die Durchgriffsöffnung 12 nahezu vollständig verschließen. Die Klappenteile 25 und 26 sind dabei so eingestellt, daß auch eine Neigung der Konturebene K optisch ansprechend erfaßt wird. Die Rückstellfedern 30, 31 sind mit ihrem freien Schenkel 32 an einer jeweiligen Anlageplatte 33 des Tragrahmens 23 abgestützt und die jeweiligen Federschenkel 32' sind an einem Anlageteil 35 des Klappenteils 25, 26 befestigt.

Die Schnittdarstellung gemäß Fig. 5 verdeutlicht, daß zumindest der Klappenteil 25 rückseitig mit einem Tasthebel 34 versehen ist, der bei in Öffnungsstellung geschwenkten Klappenteilen 25 auf dem Schaltglied 15 bei einem Auflagebereich 36 elektrisch kontaktgebend auflegbar ist. Damit ist die Öffnungs- bzw. Schließstellung des Verdeckspannbügels 9 mit geringem Aufwand kontrollierbar. Ebenso ist denkbar, daß beide Klappenteile 25, 26 jeweils einen Tasthebel (nicht dargestellt) aufweisen.

Die beiden Klappenteile 25 und 26 sind im Bereich ihrer beiden Stützachsen 27 und 28 mit einer Stellbaugruppe 37 versehen, die durch eine Schraube 38 als verlagerbares Anlageteil so einstellbar ist, daß die Klappenteile 25, 26 an die Schließkontur K des Verdeckkastendeckels 8 (Fig. 5) optimal anpaßbar sind. In Schließstellung (nicht dargestellt) liegt die Schraube 38 mit ihrer Stützfläche 39 beispielsweise an der Anlageplatte 33 so an, daß die nach oben weisende Deckfläche des Klappenteils 25, 26 bündig mit der Schließkontur K verläuft.

Im Bereich des Tragrahmens 23 ist außerdem eine bodenseitige Stellschraube vorgesehen, mit der für die Anlageschenkel 16, 17 eine deren Eingriffstiefe begrenzende Auflagestellung definiert ist.

## Patentansprüche

1. Cabriolet-Fahrzeug mit versenkbarem Verdeck, insbesondere Faltverdeck (2), dessen in Dach-Schließstellung zumindest bereichsweise auf einem heckseitigen Verdeckkastendeckel (8) auflegbarer Verdeckspannbügel (9) zumindest eine zwischen diesem und dem Verdeckkastendeckel (8) angeordnete Schließvorrichtung (10) aufweist, bei der ein am Verdeckspannbügel (9) befindliches Verbindungsglied (11) an einem unterhalb einer Durchgriffsöffnung (12) am Verdeckkastendeckel (8) vorgesehenen Gegenglied (13) festlegbar ist, und wobei im Bereich der Durchgriffsöffnung (2) zumindest eine mittels des Verbindungsgliedes (11) verlagerbare sowie mit einem Schaltglied (15) zusammenwirkende Klapp (14) vorgesehen ist, **dadurch gekennzeichnet, daß** das Verbindungsglied (11) zumindest zwei Anlageschenkel (16, 17) aufweist und zwischen diesen ein das Gegenglied (13) zumindest bereichsweise formschlüssig erfassender Aufnahmespalt (A) gebildet ist.

2. **Cabriolet-Fahrzeug nach Anspruch 1, dadurch gekennzeichnet, daß die Anla**geschenkel (16, 17) der Schließvorrichtung (10) im wesentlichen parallel zur Fahrzeuglängsmittelebene (M) und spiegelbildlich im Abstand zur Mittellängsebene (B) der Schließvorrichtung (10) angeordnet sind und dabei das in der Mittellängsebene (B) verlaufende Gegenglied (13) in den Aufnahmespalt (A) eingreift.

3. Cabriolet-Fahrzeug nach Anspruch 1 oder 2, **dadurch gekennzeichnet, daß** dieses im Verbindungsbereich zwischen Verdeckkastendeckel (8) und Verdeckspannbügel (9) mit zwei im wesentlichen spiegelbildlich zur Fahrzeuglängsmittelebene (M) gegenüberliegenden Schließvorrichtungen (10) versehen ist.

4. Cabriolet-Fahrzeug nach einem der Ansprüche 1 bis 3, **dadurch gekennzeichnet, daß** mit den am Gegenglied (13) anliegenden Anlageschenkeln (16, 17) eine quer und/oder längs zur Fahrzeuglängsmittelebene (M) wirksame Bewegungen von Verdeckspannbügel (9) und/oder Verdeckkastendeckel (8) aufnehmende Stützverbindung gebildet ist.

5. Schließvorrichtung nach einem der Ansprüche 1 bis 4, **dadurch gekennzeichnet, daß** die beiden Anlageschenkel (16, 17) jeweils mit im wesentlichen gleicher Länge am Gegenglied (13) anlegbar sind.

6. Schließvorrichtung nach einem der Ansprüche 1 bis 5, **dadurch clekennzeichnet,** daß die Anlageschenkel (16, 17) durch zumindest einen Quersteg verbunden sind und dieser im Bereich des Gegengliedes (13) in eine Aufnahmemulde (20) einführbar ist.

7. Schließvorrichtung nach einem der Ansprüche 1 bis 6, **dadurch gekennzeichnet, daß** die Anlageschenkel (16, 17) an ihrem jeweiligen freien Ende mit einem seitlich am Gegenglied (13) anlegbaren Stützansatz (21, 22) versehen sind.

8. Schließvorrichtung nach Anspruch 7, **dadurch gekennzeichnet, daß** die Anlageschenkel (16, 17) im Bereich der beiden Stützansätze (21, 22) durch den Quersteg verbunden sind.

9. Schließvorrichtung nach einem der Ansprüche 1 bis 8, **dadurch gekennzeichnet, daß** die Anlageschenkel (16, 17) jeweils rollenförmig ausgebildete Stützansätze (21, 22) aufweisen, deren Umfangskontur über die Anlageschenkel (16, 17) stirnseitig vorsteht.

10. Schließvorrichtung nach einem der Ansprüche 1 bis 9, **dadurch gekennzeichnet, daß** das Gegenglied (13) an einem eine zentrale Formausnehmung als Aufnahmeöffnung bildenden Tragrahmen (23) vorgesehen ist und dieser unterhalb der Durchgriffsöffnung (12) am Verdeckkastendeckel (8) festgelegt ist.

11. Schließvorrichtung nach Anspruch 10, **dadurch gekennzeichnet, daß** der das Gegenglied (13) aufweisende Tragrahmen (23) im Bereich seiner Aufnahmeöffnung mit zwei, die Klappe (14) bildenden Klappenteilen (25, 26) versehen ist, deren jeweilige Stützachse (26, 27) parallel zur Mittellängsebene (B) der Schließvorrichtung (10) verläuft.

12. Schließvorrichtung nach Anspruch 11, **dadurch gekennzeichnet, daß** die Klappenteile (25, 26) in einer am oberen Randbereich des Gegengliedes (13) gegenüberliegenden Schließstellung gehalten und mittels der am Verdeckspannbügel (9) befindlichen Anlageschenkel (16, 17) nach unten schwenkend in die Öffnungsstellung überführbar sind.

13. Schließvorrichtung nach einem der Ansprüche 11 und 12, **dadurch gekennzeichnet, daß** die beiden Klappenteile (25, 26) im Bereich ihrer in Schließstellung gegenüberliegenden Umfangskontur jeweils eine das Gegenglied (13) bereichsweise aufnehmende Formausnehmung (29, 29') aufweisen.

14. Schließvorrichtung nach einem der Ansprüche 11 bis 13, **dadurch gekennzeichnet, daß** die beiden Klappenteile (25, 26) an ihrer Unterseite jeweils eine die Stützachse (26, 27) umgreifende Rückstellfeder (30, 31) aufweisen, die andererseits am Tragrahmen (23) abgestützt ist.

15. Schließvorrichtung nach einem der Ansprüche 11 bis 14, **dadurch gekennzeichnet, daß** zumindest eines der Klappenteile (26) rückseitig mit einem Tasthebel (34) versehen ist, der bei in Öffnungsstellung geschwenkter Klappenteile (26) auf dem elektrischen Schaltglied (15) kontaktgebend (bei 36) auflegbar ist.

16. Schließvorrichtung nach Anspruch 15, **dadurch gekennzeichnet, daß** beide Klappenteile (26, 27) jeweils einen Tasthebel (34) aufweisen.

17. Schließvorrichtung nach einem der Ansprüche 11 bis 16, **dadurch gekennzeichnet, daß** an beiden Klappenteilen (26, 27) eine jeweilige Stellbaugruppe (37) vorgesehen ist, mit der die jeweilige Schließlage der Klappe durch ein verlagerbares Anlageteil (38) einstellbar ist.

## Claims

1. A cabriolet vehicle having a foldaway soft top, in particular a folding soft top (2), of which the soft top tension bracket (9), which, in the roof closing position, can, at least in areas, be applied to a rear-side soft top compartment cover (8), has at least one closing device (10), which is arranged between the soft top tension bracket and the soft top compartment cover (8) and in which a connecting member (11) which is located at the soft top tension bracket (9) can be fixed at a counter-member (13) which is provided below a passage opening (12) at the soft top compartment cover (8), and whereby, in the area of the passage opening (2) at least one flap (14) is provided which can be displaced using the connecting member (11) and which cooperates with a switching member (15), **characterised in that** the connecting member (11) has at least two abutment legs (16, 17) and that a receiving gap (A) is formed between these, which surrounds the counter member (13), at least in areas, in a form-fitting manner.

2. The cabriolet vehicle according to Claim 1, **characterised in that** the abutment legs (16, 17) of the closing device (10) are arranged substantially parallel to the vehicle longitudinal midplane (M) and spaced apart, in a mirror-inverted manner, from the central longitudinal plane (B) of the closing device (10), and the counter-member (13), which runs in the central longitudinal plane (B), thereby engages with the receiving gap (A).

3. The cabriolet vehicle according to Claim 1 or 2, **characterised in that** it is provided, in the connecting area between the soft top compartment cover (8) and the soft top tension bracket (9), with two closing devices (10), which lie opposite each other, in respect of the vehicle longitudinal midplane (M), in a substantially mirror-inverted manner.

4. The cabriolet vehicle according to one of Claims 1 to 3, **characterised in that** a support connection is formed by the abutment legs (16, 17) which abut the counter-member (13), which support connection receives movements which act transversely and/or longitudinally in respect of the vehicle longitudinal midplane (M), from soft top tension bracket (9) and/or soft top compartment cover (8).

5. The closing device according to one of Claims 1 to 4, **characterised in that** substantially the same length of the two abutment legs (16, 17) respectively, can abut the counter-member (13).

6. The closing device according to one of Claims 1 to 5, **characterised in that** the abutment legs (16, 17) are connected by at least one transverse bar and that this is able to be introduced into a receiving cavity (20) in the area of the counter-member (13).

7. The closing device according to one of Claims 1 to 6, **characterised in that** the abutment legs (16, 17) are provided, at their respective free end, with a support lug (21, 22), which can laterally abut the counter-member (13).

8. The closing device according to Claim 7, **characterised in that** the abutment legs (16, 17) are connected by the transverse bar in the area of the two support lugs (21, 22).

9. The closing device according to one of Claims 1 to 8, **characterised in that** the abutment legs (16, 17) each have support lugs (21, 22) formed in a roller-shaped manner, of which the peripheral contour frontally projects over the abutment legs (16, 17).

10. The closing device according to one of Claims 1 to 9, **characterised in that** the counter-member (13) is provided at a bearing frame (23) which forms a central formed opening as a receiving opening and that this bearing frame is fixed below the passage opening (12) at the soft top compartment cover (8).

11. The closing device according to Claim 10, **characterised in that**, in the area of its receiving opening, the bearing frame (23) having the counter-member (13) is provided with two flap parts (25, 26) forming the flap (14), the respective support axle of which runs parallel to the central longitudinal plane (B) of the closing device (10).

12. The closing device according to Claim 11, **characterised in that** the flap parts (25, 26) are maintained in an opposing closing position at the upper edge area of the counter-member (13), and can be conveyed into the opening position, downwardly in a pivoting manner, by means of the abutment legs (16, 17) which are located at the soft top tension bracket (9).

13. The closing device according to one of Claims 11 and 12, **characterised in that** the two flap parts (25, 26), in the area of their peripheral contour which lies opposite in the closing position, each have a formed recess (29, 29') which receives the counter-member (13) in areas.

14. The closing device according to one of Claims 11 to 13, **characterised in that** the two flap parts (25, 26) each have, at their lower side, a readjusting spring (30, 31) encompassing a support axle, which readjusting spring is supported otherwise at the bearing frame (23).

15. The closing device according to one of Claims 11 to 14, **characterised in that** at least one of the flap parts (26) is provided, at the back, with a touching lever (34), which can be applied to the electrical switching member (15) in a contact-furnishing manner (at 36), when the flap parts (26) are pivoted into the opening position.

16. The closing device according to Claim 15, **characterised in that** the two flap parts each have a touching lever (34).

17. The closing device according to one of Claims 11 to 16, **characterised in that**, at the two flap parts, there is provided a respective adjusting assembly (37), with which the respective closing state of the flap can be adjusted by means of a displaceable abutment part (38).

## Revendications

1. Véhicule cabriolet ayant une capote escamotable, en particulier une capote repliable (2), dont une bride de fixation de capote (9), en position fermée du toit, au moins en zone, laquelle peut être accrochée sur un couvercle de coffre à capote (8) situé à l'arrière, présente au moins un dispositif de fermeture (10) agencé entre celle-ci et le couvercle de coffre à capote (8), au niveau duquel un élément de liaison (11) se trouvant au niveau de la bride de fixation de capote (9) peut être fixé à un contre-élément (13) prévu au-dessous d'une ouverture de passage (12) au niveau du couvercle de coffre à capote (8), et grâce auquel il est prévu au moins un volet (14) dans la zone d'ouverture de passage (12) qui coopère avec un élément de commande (15) et peut être déplacé par l'intermédiaire de l'élément de liaison (11), **caractérisé en ce que** l'élément de liaison (11) présente au moins deux montants d'installation (16, 17) et, entre ceux-ci, une fente d'accueil (A) prenant au moins en partie le contre-élément (13) de façon à ce qu'il soit emboîté est formée.

2. Véhicule cabriolet selon la revendication 1, **caractérisé en ce que** les montants d'installation (16, 17) du dispositif de fermeture (10) sont disposés de façon sensiblement parallèle au plan central longitudinal du véhicule (M) et espacés à la façon d'une image inversée par rapport au plan longitudinal central (B) du dispositif de fermeture (10) et de ce fait le contre-élément (13) passant dans le plan longitudinal central (B) s'engrène dans la fente d'accueil (A).

3. Véhicule cabriolet selon la revendication 1 ou la revendication 2, **caractérisé en ce que** celui-ci est muni, dans la zone de liaison entre le couvercle de coffre à capote (8) et la bride de fixation de capote (9), de deux dispositifs de fermeture (10) essentiellement à la façon d'une image inversée à l'opposé du plan central longitudinal du véhicule (M).

4. Véhicule cabriolet selon l'une des revendications 1 à 3, **caractérisé en ce que**, les montants d'installation (16, 17) étant adjacents au contre-élément (13), une liaison de support est formée, laquelle reçoit des mouvements opérationnels transversaux et/ou longitudinaux par rapport au plan central longitudinal du véhicule (M) provenant de la bride de fixation de capote (9) et/ou du couvercle de coffre à capote (8).

5. Dispositif de fermeture selon l'une des revendications 1 à 4, **caractérisé en ce que** les deux montants d'installation (16, 17) peuvent chacun être disposés essentiellement avec une longueur égale au niveau du contre-élément (13).

6. Dispositif de fermeture selon l'une des revendications 1 à 5, **caractérisé en ce que** les montants d'installation (16, 17) sont reliés par au moins une entretoise et celle-ci peut être insérée dans une cavité d'accueil (20) dans la zone du contre-élément (13).

7. Dispositif de fermeture selon l'une des revendications 1 à 6, **caractérisé en ce que** les montants d'installation (16, 17) sont munis au niveau de chacune de leurs extrémités libres d'une saillie de support (21, 22) qui peut être disposée latéralement au niveau du contre-élément (13).

8. Dispositif de fermeture selon la revendication 7, **caractérisé en ce que** les montants d'installation (16, 17) sont reliés par l'entretoise dans la zone des deux saillies de support (21, 22).

9. Dispositif de fermeture selon l'une des revendications 1 à 8, **caractérisé en ce que** les montants d'installation (16, 17) présentent chacun des saillies de support (21, 22) formées en rouleaux, dont le contour périphérique fait saillie à l'avant des montants d'installation (16,17).

10. Dispositif de fermeture selon l'une des revendications 1 à 9, **caractérisé en ce que** le contre-élément (13) est fourni au niveau d'un cadre porteur (23) formant un évidement central faisant office d'ouverture d'accueil et celui-ci est situé au-dessous de l'ouverture de passage (12) au niveau du couvercle de coffre à capote (8).

11. Dispositif de fermeture selon la revendication 10, **caractérisé en ce que** le cadre porteur (23) qui présente le contre-élément (13) est muni dans la zone de son ouverture d'accueil de deux parties de volets (25, 26) qui forment le volet (14), dont chaque axe de support (26, 27) se prolonge parallèlement au plan longitudinal central (B) du dispositif de fermeture (10).

12. Dispositif de fermeture selon la revendication 11, **caractérisé en ce que** les parties de volets (25, 26) sont maintenues dans une position fermée opposée au niveau de la zone de bord supérieure du contre-élément (13) et peuvent, par l'intermédiaire des montants d'installation (16, 17) situés au niveau de la bride de fixation de capote (9), être déplacées de façon pivotante vers le bas dans la position ouverte.

13. Dispositif de fermeture selon l'une des revendications 11 et 12, **caractérisé en ce que** les deux parties de volets (25, 26) présentent chacune dans la zone de leur contour périphérique opposé en position fermée un évidement (29, 29') recevant en partie le contre-élément (13).

14. Dispositif de fermeture selon l'une des revendications 11 à 13, **caractérisé en ce que** les deux parties de volets (25, 26) présentent chacune au niveau de leur côté inférieur un ressort de rappel (30, 31) qui enveloppe l'axe de support (26, 27), lequel est soutenu d'autre part au niveau du cadre porteur (23).

15. Dispositif de fermeture selon l'une des revendications 11 à 14, **caractérisé en ce qu'**au moins une des parties de volets (26) est munie d'un levier palpeur (34) situé à l'arrière, lequel peut être disposé de façon à transmettre un contact (par le biais de 36) à l'élément de commande (15) électrique, lorsque les parties de volets (26) sont pivotées en position ouverte.

16. Dispositif de fermeture selon la revendication 15, **caractérisé en ce que** les deux parties de volets (26, 27) présentent chacune un levier palpeur (34).

17. Dispositif de fermeture selon l'une des revendications 11 à 16, **caractérisé en ce que,** au niveau des deux parties de volets (26, 27), un bloc de commande respectif (37) est prévu, avec lequel l'état de fermeture respectif du volet peut être ajusté grâce à une pièce d'équipement (38) déplaçable.
